Europäisches Patentamt

European Patent Office

Office européen des brevets

(11) Veröffentlichungsnummer: **0 463 469 A2**

# EUROPÄISCHE PATENTANMELDUNG

(21) Anmeldenummer: **91109597.4**

(51) Int. Cl.5: **H04L 27/36**

(22) Anmeldetag: **12.06.91**

(30) Priorität: **21.06.90 DE 4019725**

(43) Veröffentlichungstag der Anmeldung:
**02.01.92 Patentblatt 92/01**

(84) Benannte Vertragsstaaten:
**DE FR GB IT SE**

(71) Anmelder: **Licentia Patent-Verwaltungs-GmbH**
**Theodor-Stern-Kai 1**
**W-6000 Frankfurt/Main 70(DE)**

(72) Erfinder: **Dressler, Hans-Joachim**
**Sonnenstrasse 30/1**
**W-7900 Ulm(DE)**

(74) Vertreter: **Amersbach, Werner, Dipl.-Ing. et al**
**Licentia Patent-Verwaltungs-GmbH**
**Theodor-Stern-Kai 1**
**W-6000 Frankfurt 70(DE)**

(54) **Ein interpolativer Digital/Analog-Umsetzer für Bandpass-Signale.**

(57) Bei einem hochauflösenden Digital/Analog-Umsetzer für Bandpaß-Signale bei gegebener hochauflösender digitaler Darstellung der Inphasen- und Quadraturkomponente des zu wandelnden Bandpaß-Signals bestehend aus Digitalteil, D/A-Umsetzer und Analogteil, ist vorgesehen, daß er ein interpolatives Verfahren anwendet und mit einem grobquantisierenden D/A-Umsetzer mit minimaler Auflösung 1 bit auskommt, ohne die Auflösung des zu wandelnden Bandpaß-Signals wesentlich zu beeinflussen.

EP 0 463 469 A2

Die Erfindung bezieht sich auf einen Digital/Analog-Umsetzer zum Umsetzen von digitalen Bandpaß-Signalen nach dem Oberbegriff des Anspruchs 1, insbesondere für die Trägerfrequenz oder Zwischenfrequenz in Funksendern oder Sendeteilen, oder Anlagen zur trägerfrequenten Nachrichtenübertragung.

Die Digital/Analog-Umsetzung im Basisband und darauf folgende analoge Quadraturmodulation ist gemeinhin bekannt. Eine analoge Quadraturmodulation läßt sich jedoch wegen nichtidealer Bauelementeigenschaften wie Rauschen, Alterung, Temperaturdrift, DC-Offset und Toleranzen nicht ideal durchführen und läßt sich außerdem nicht vollständig integrieren. Weiterhin ist es bekannt, die Quadraturmodulation digital durchzuführen und die Digital/Analog-Umsetzung in der Trägerlage vorzunehmen. Dieses Verfahren ist wegen der dazu erforderlichen schnellen hochauflösenden Digital/Analog-Umsetzer aufwendig und teuer.

Weiterhin sind aus IEEE Transactions and Communications 1974, 1797ff hochauflösende Verfahren zur interpolativen Digital/Analog-Umsetzung bekannt, die an der Digital-Analog-Schnittstelle nur wenige Quantisierungsstufen benötigen. Diese Verfahren sind aber nur für Tiefpaß-Signale geeignet. Aufgabe der Erfindung ist es daher, eine hochauflösende D/A-Umsetzung von Bandpaß-Signalen mit nur wenigen, minimal zwei Quantisierungsstufen durchzuführen. Erfindungsgemäß wird diese Aufgabe durch die im kennzeichnenden Teil des Anspruchs 1 angegebenen Merkmale gelöst. Vorteilhafte Ausgestaltungen und/oder Weiterbildungen sind den Unteransprüchen entnehmbar.

Der erfindungsgemäße interpolative Digital/Analog-Umsetzer besteht aus Digitalteil, einem Digital/Analog-Umsetzer grober, minimal 1 bit Auflösung und Analogteil. Im Digitalteil wird aus dem vorgegebenen, hochaufgelösten digitalen Inphasen- und Quadratursignal das entsprechende digitale Bandpaß-Signal mit verkürzter Wortbreite gebildet, ohne die Auflösung der relevanten Signalanteile wesentlich zu beeinflussen. Dazu werden digitale Quantisierer eingesetzt, die mit Überabtastung arbeiten und das aus der Wortbreitenverkürzung resultierende Quantisierungsrauschen so färben, daß relevante Signalanteile davon unbeeinflußt bleiben. Durch diese digitale Vorverarbeitung gelingt es, an der Digital/Analog-Schnittstelle einen Digital/Analog-Umsetzer mit reduzierter Wortbreite einzusetzen. Die nichtrelevanten Signalanteile, die im wesentlichen außerhalb des Nutzfrequenzbereichs liegen, lassen sich anschließend mit einem analogen Bandpaß entsprechender Mittenfrequenz und Bandbreite eliminieren.

Die Erfindung wird im folgenden anhand der Figuren näher erläutert.

Fig. 1      zeigt einen herkömmlichen analogen Quadraturmodulator,

Fig. 2      zeigt einen bekannten digitalen Quadraturmodulator,

Fig. 3      zeigt einen möglichen Aufbau des erfindungsgemäßen Digital/Analog-Umsetzers für Bandpaß-Signale,

Fig. 4      zeigt eine Abwandlung des Aufbaus aus Fig. 3.

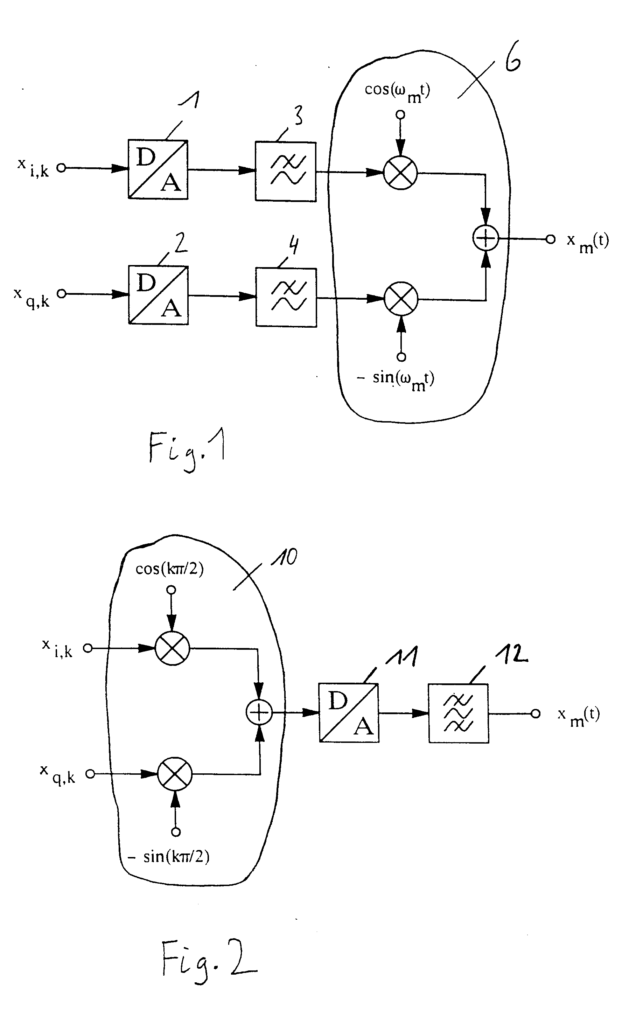

In Fig. 1 werden die digitale Inphasenkomponente $x_{i,k}$ und die Quadraturkomponente $x_{q,k}$ zunächst in den Digital/Analog-Umsetzern 1,2 getrennt in Analogsignale umgesetzt und in den Tiefpässen 3,4 die störenden Oberwellenanteile entfernt. Anschließend werden die analogen Quadraturkomponenten im analogen Quadraturmodulator 6 mit der Frequenz

$$f_m \;\; = \;\; \frac{\omega_m}{2\pi}$$

moduliert.

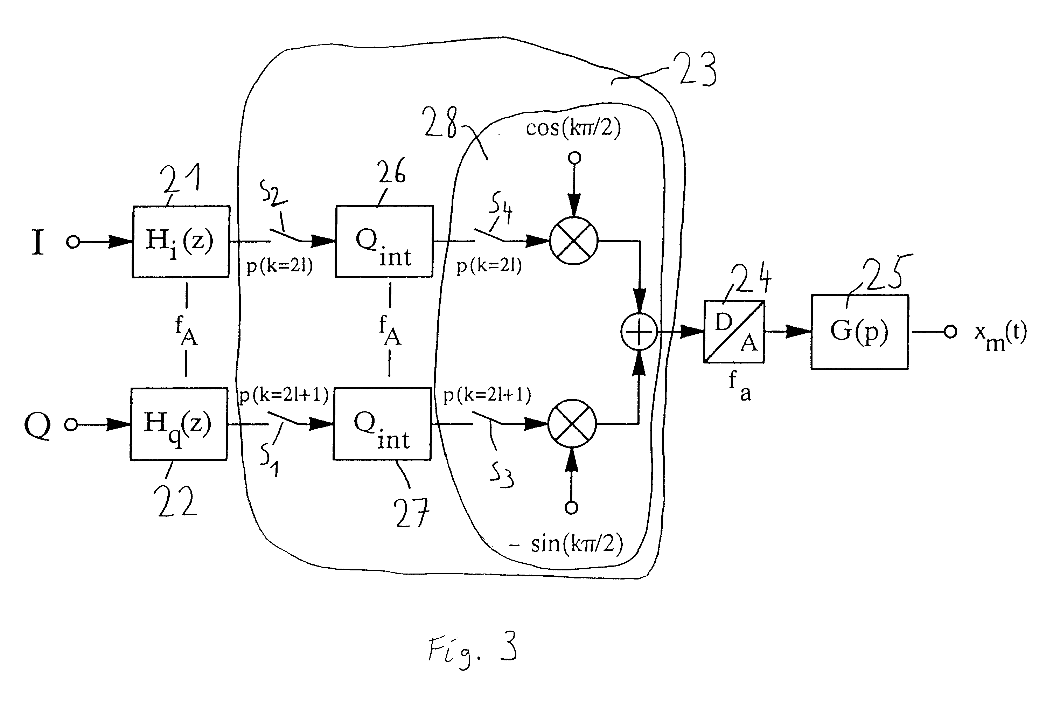

In Fig. 2 werden die digitale Inphasenkomponente $x_{i,k}$ und die digitale Quadraturkomponente $x_{q,k}$ im digitalen Quadraturmodulator 10 moduliert und dann erst im D/A-Umsetzer 11 umgesetzt. Diese D/A-Umsetzer sind je nach Frequenzniveau und erforderlicher Auflösung sehr aufwendig aufgebaut. Am Ausgang des D/A-Umsetzers 11 ist schließlich ein Bandpaß 12 angeschlossen, an dessen Ausgang das analoge Bandpaß-Signal $x_m(t)$ zur Verfügung steht.

Fig. 3 zeigt eine bevorzugte Ausführungsform des erfindungsgemäßen Digital/Analog-Umsetzers für Bandpaß-Signale. Er besteht aus den Digital-Filtern 21,22, dem interpolativen digitalen Quadraturmodulator 23, dem D/A-Umsetzer mit grober Auflösung 24 und dem analogen Bandpaß 25. Der interpolative digitale Quadraturmodulator 23 ist aus interpolativen Quantisierern 26,27 und dem digitalen Quadraturmodulator 28 aufgebaut. Der D/A-Wandler 24 wird mit der Frequenz $f_a$ betrieben. Für $f_a$ gilt:

$$f_a \;\; = \;\; \frac{1}{T} \;\; = \;\; \frac{4}{2m+1} \;\; f_m \;\; > \;\; 2NB \qquad\qquad (1)$$

wobei

$m$ = 0;1;2;3;...

$f_m$ = Trägerlage des digitalen Bandpaß-Signals

$B$ = Bandbreite des digitalen Bandpaß-Signals

und

$N \gg 1$

Die Digitalfilter 21, 22 und die interpolativen Quantisierer 26,27 werden mit der Frequenz

$$f_A = \frac{f_a}{2}$$

betrieben.

Das Digitalfilter 21 erzeugt Abtastwerte der Inphasenkomponente $I$ im Abtastraster

$$t_{k=2l} = 2lT \qquad (2);$$

wie durch den real nicht vorhandenen Schalter $S_2$ angedeutet;

das Digitalfilter 22 erzeugt Abtastwerte der Quadraturkomponente $Q$ im Abtastraster

$$t_{k=2l+1} = (2l+1) \cdot T \qquad (3);$$

wie durch den real nicht vorhandenen Schalter $S_1$ angedeutet;

wobei $l$ = 0;1;2;...;

jeweils durch digitale Interpolation, wie sie z.B. aus H.W. Schüßler, Digitale Signalverarbeitung, Springer-Verlag 1988, bekannt ist. Als interpolative Quantisierer 26, 27 können rückgekoppelte Strukturen verwendet werden, wie sie von der interpolativen D/A-Umsetzung von Tiefpaß-Signalen aus IEEE Trans. and Communication, Vol. COM-22, No. 11, Nov. 1974, Seite 1797-1806 bekannt sind. Der interpolative Quantisierer 26 erzeugt Abtastwerte im Abtastraster nach Gleichung (2), wie durch den real nicht vorhandenen Schalter $S_4$ angedeutet wird. Der interpolative Quantisierer 27 erzeugt Abtastwerte im Abtastraster nach Gleichung (3), wie durch den real nicht vorhandenen Schalter $S_3$ angedeutet wird. Bei der interpolativen Amplitudenquantisierung in den interpolativen Quantisierern 26,27 wird das Quantisierungsrauschen spektral so gefärbt, daß die signifikanten Anteile des Quantisierungsrauschens außerhalb des Nutzfrequenzbereichs liegen.

Im digitalen Quadraturmodulator 28 wird die Inphasenkomponente $I$ mit dem Trägersignal

$$\cos \left( k \cdot \frac{\pi}{2} \right)$$

multipliziert, wobei $k = 2l$.

Die Quadraturkomponente Q wird mit

$$-sin\left( k \cdot \frac{\pi}{2} \right)$$

multipliziert, wobei $k = 2l+1$. Da die beiden Trägersignale nur Werte aus der Menge {1,0,-1} annehmen, kann auf Digitalmultiplizierer verzichtet werden. Daran anschließend werden die beiden Folgen addiert.

Die gewählte Darstellung der Trägersignale erlaubt es, das aus der digitalen Quadraturmodulation resultierende Bandpaß-Signal mit der gleichen verkürzten Wortbreite $w$ darzustellen wie Inphasen- und Quadraturkomponente.

Durch einen genügend großen Überabtastfaktor $N$ in Gleichung (1) wird erreicht, daß man mit wenigen oder sogar nur zwei Quantisierungsstufen eine hohe Nutzsignalauflösung erhält, entsprechend dem Signal-Rausch-Abstand im Nutzfrequenzbereich. Das digitale Bandpaß-Signal mit der reduzierten Wortbreite $w$ wird nun mittels eines Digital/Analog-Umsetzers der Auflösung $w$ bit in ein Analogsignal umgesetzt. Durch anschließende Filterung im analogen Bandpaß 25, dessen Mittenfrequenz und Bandbreite mit der Trägerfrequenz $f_m$ und Bandbreite $B$ des Bandpaß-Signals aus Gleichung (1) exakt oder näherungsweise übereinstimmt, wird das durch die vorhergehenden Stufen erzeugte Rauschen außerhalb des relevanten Frequenzbereichs unterdrückt. So steht am Ausgang ein feinquantisiertes Bandpaß-Signal zur Verfügung.

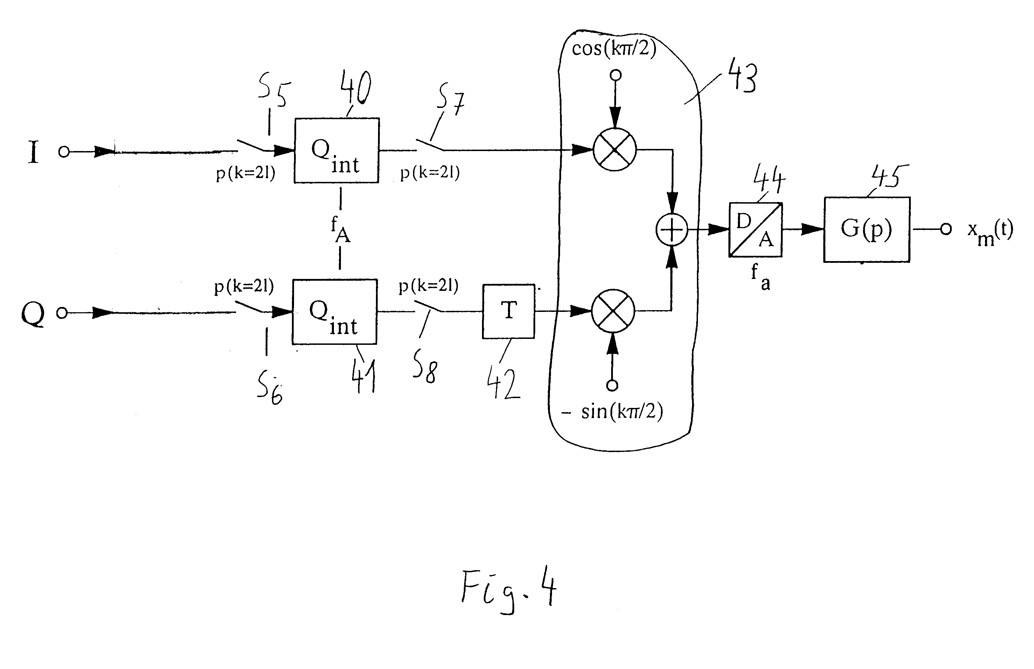

Fig. 4 zeigt eine modifizierte Struktur des erfindungsgemäßen D/A-Umsetzers für Bandpaß-Signale. Er eignet sich besonders für diejenigen Anwendungsfälle, in denen Inphasen- und Quadratursignal bereits beide im Abtastraster $p(k=2l)$ mit $l=0;1;2...$ vorliegen. Das Inphasensignal $I$ und das Quadratursignal $Q$ werden jeweils in den interpolativen Quantisierern 40, 41 mit der Frequenz $f_A$ grobquantisiert. Die real nicht vorhandenen Schalter $S_5$ - $S_8$ sollen andeuten, daß die einzelnen Werte im Abtastraster $p(k=2l)$ vorliegen. Das zur Durchführung der Quadraturmodulation notwendige Abtastraster erhält man durch die Verzögerung der Quadraturkomponente um eine Abtastperiode

$$T = \frac{1}{f_a}$$

im Verzögerungsglied 42.

Der Aufbau und die Wirkungsweise der sonstigen Bauteile entsprechen denen von Fig. 3. So entspricht der digitale Quadraturmodulator 43 dem digitalen Quadraturmodulator 28, der D/A-Umsetzer 44 dem D/A-Umsetzer 24, und der Bandpaß 45 dem Bandpaß 25. Der durch diese Modifikation auftretende Fehler ist sehr klein, da die Inphasen- und Quadraturkomponente wegen $N>>1$ gegenüber der Abtastrate extrem schmalbandig sind und für Abtastwerte im Quadraturzweig in guter Näherung gilt:

$$x_{q,2l+1} \approx x_{q,2l}$$

Sofern die Eingangssignale nicht im Abtastraster $p(k=2l)$ vorliegen, müssen für den modifizierten Aufbau in Fig. 4 Interpolationsfilter jeweils vor die Quantisierer 40, 41 vorgeschaltet werden, die die Signale in das Abtastraster bringen. Die vorstehenden Ausführungsbeispiele sind nicht vollständig und können vom Fachmann leicht abgewandelt werden. So ist es z.B. möglich, beim Vorliegen des Abtastrasters $p(k=2l+1)$ das Verzögerungsglied 42 in den Inphasenzweig einzubauen.

## Patentansprüche

1. Hochauflösender Digital/Analog-Umsetzer für Bandpaß-Signale bei gegebener hochauflösender digitaler Darstellung der Inphasen- und Quadraturkomponente des zu wandelnden Bandpaß-Signals bestehend aus Digitalteil, D/A-Umsetzer und Analogteil, dadurch gekennzeichnet, daß er ein interpolatives Verfahren anwendet und mit einem grobquantisierenden D/A-Umsetzer mit minimaler Auflösung 1 bit auskommt, ohne die Auflösung des zu wandelnden Bandpaß-Signals wesentlich zu beeinflussen.

2. Interpolativer Digital/Analog-Umsetzer nach Anspruch 1, dadurch gekennzeichnet, daß Taktfrequenz $f_a$ des Digital/Analog-Umsetzers und Mittenfrequenz $f_m$ des Bandpaß-Signals im Verhältnis

$$\frac{f_m}{f_a} = \frac{2m+1}{4} \qquad (m = 0,1,2,...)$$

zueinander stehen und gleichzeitig gilt

$$f_a = \frac{1}{T} > 2NB \quad (N >> 1) \quad ,$$

wobei $N$ den Überabtastfaktor und $B$ die Bandbreite des zu wandelnden Bandpaß-Signals bezeichnet.

3. Interpolativer Digital/Analog-Umsetzer nach Anspruch 1, dadurch gekennzeichnet, daß die gegebene digitale Inphasen- und Quadraturkomponente des Bandpaß-Signals zunächst im gewünschten, einer Überabtastung entsprechenden Abtastraster dargestellt wird (Interpolation), um den interpolativen Digital/Analog-Umsetzer bei der gewünschten Überabtastrate $f_a$ nach Anspruch 2 betreiben zu können.

4. Interpolativer Digital/Analog-Umsetzer nach Anspruch 1, dadurch gekennzeichnet, daß durch jeweils eine rückgekoppelte Anordnung im digitalen Inphasen- und Quadraturzweig des Digital/Analog-Umsetzers nach Anspruch 1 die Wortbreite der durch Überabtastung dargestellten digitalen Inphasen- und Quadraturkomponente des Bandpaß-Signals auf minimal 1 bit reduziert wird, wobei die rückgekoppelte

4

Anordnung dafür sorgt, daß das durch die Wortverkürzung entstehende Quantisierungsrauschen spektral derart gefärbt wird, daß deren Hauptanteile im wesentlichen außerhalb des Nutzfrequenzbereichs liegen.

5. Interpolativer Digital/Analog-Umsetzer nach Anspruch 1, dadurch gekennzeichnet, daß das digitale Inphasen- und Quadratursignal mit verkürzter Wortbreite $w$ (Wortlängenverkürzung nach Anspruch 4) digital quadraturmoduliert wird, derart, daß sich das resultierende digitale Bandpaß-Signal durch die verkürzte Wortbreite $w$ exakt darstellen läßt.

6. Interpolativer Digital/Analog-Umsetzer nach Anspruch 1, dadurch gekennzeichnet, daß das Analogsignal am Ausgang des Digital/Analog-Umsetzers mit einem analogen Bandpaß, dessen Mittenfrequenz und Bandbreite mit der in Anspruch 2 definierten Bandbreite $B$ und Mittenfrequenz $f_m$ des Bandpaß-Signals exakt oder näherungsweise übereinstimmt.

7. Interpolativer Digital/Analog-Umsetzer nach Anspruch 1, dadurch gekennzeichnet, daß bei Vorliegen des Abtastrasters $p(k=2l)$ für Inphasen- und Quadraturkomponente die Darstellung im gewünschten Abtastraster nach Anspruch 3 entfällt und nach Verkürzung der Wortbreite auf $w$ bit gemäß Anspruch 3 eine Verzögerung um einen Abtasttakt $T$ eingeführt wird.

Fig.1

Fig.2

Fig. 3

EP 0 463 469 A2

Fig. 4

$x_m(t)$

45 G(p)

44 D/A $f_a$

43 $\cos(k\pi/2)$ $-\sin(k\pi/2)$

42 T

S7 p(k=2l)

S8 p(k=2l)

40 $Q_{int}$ $f_A$

41 $Q_{int}$

S5 p(k=2l)

S6 p(k=2l)

I

Q